# FASCICULE DE BREVET EUROPEEN

(11) **EP 0 702 189 B1**
(45) Date de publication et mention de la délivrance du brevet: **01.04.1998**
(21) Numéro de dépôt: 95402046.7
(22) Date de dépôt: 11.09.1995
(51) Int. Cl.: F16L 51/02

(54) **Joint de dilatation pour conduites chaudes**
Ausdehnungsverbindung für heisse Rohrleitungen
Dilatation joint for hot pipes

(30) Priorité: 14.09.1994 FR 9410973
(43) Date de publication de la demande: 20.03.1996
(73) Titulaire: GEC ALSTHOM Stein Industrie, 78140 Velizy-Villacoublay (FR)
(72) Inventeur: Boyer, Claude, F-94240 L'Hay les Roses (FR); Nolleau, Dominique, F-75015 Paris (FR)
(74) Mandataire: Fournier, Michel

(56) Documents cités:
- CH-A- 503 945
- FR-A- 658 066
- US-A- 3 871 689
- PATENT ABSTRACTS OF JAPAN vol. 16 no. 494 (M-1324) ,13 Octobre 1992 & JP-A-04 181088 (TOUKIYOU RASENKAN SEISAKUSHIYO KK) 29 Juin 1992,

## Description

La présente invention se rapporte à un joint de dilatation pour conduites chaudes.

Elle concerne plus précisément un joint de dilatation reliant les extrémités de deux conduites destinées à véhiculer un fluide chaud, chacune des extrémités étant pourvue d'une bride d'extrémité, comportant un manchon constitué d'une bande souple chevauchant les deux extrémités adjacentes et solidaire à ses bords respectivement d'une bride dite bride froide solidaire d'un dispositif d'emboîtement dans un agencement de retenue solidaire de la conduite correspondante et comportant également un agencement de liaison reliant la bride d'extrémité et la bride froide correspondante.

Dans un tel joint de dilatation connu, l'agencement de liaison est une tôle métallique plane en forme de manchon. De par sa souplesse en flexion, cette tôle encaisse partiellement les déformations thermiques dues à l'écart de températures entre la bride d'extrémité qui est chaude et la bride froide et à la dilatation propre des conduites. Un tel agencement génère des contraintes importantes localisées dans les angles des brides et est peu fiable dans le cas de conduites de grandes dimensions et véhiculant des fluides à très haute température.

Or des joints de dilatation de ce type sont nécessaires en particulier pour des conduites d'entrée de chaudière de récupération en sortie de turbine à gaz où la bride d'extrémité chaude est soumise à une température de l'ordre de 600°C et la bride froide à une température de l'ordre de 200°C et les dilatations différentielles sont en conséquence importantes. De plus de telles conduites sont généralement de section carrée de grande dimension, leur côté pouvant être de l'ordre de 7,50 mètres.

Pour résoudre ces problèmes techniques et permettre de réaliser un joint de dilatation adapté à une telle application, conformément à l'invention, cet agencement de liaison comprend au moins deux éléments reliés l'un à l'autre, dits premier et second élément, l'un solidaire de la bride froide et l'autre solidaire de la bride d'extrémité, le premier élément étant un manchon de tôle ondulée, dont les ondulations sont dirigées parallèlement au sens longitudinal de la conduite, et le second élément étant flexible et déformable dans le sens longitudinal de la conduite.

Selon le mode de réalisation préféré de l'invention, le second élément est de préférence une lame flexible courbée, de courbure perpendiculaire aux ondulations du manchon.

Avantageusement, l'agencement de liaison comprend deux seconds éléments, l'un solidaire de la bride froide et l'autre solidaire de la bride d'extrémité, ces deux éléments étant reliés l'un à l'autre par un premier élément intermédiaire.

L'invention concerne également une conduite de passage de gaz chaud en sortie d'une turbine à gaz dans une chaudière de récupération, constituée de tronçons de conduites reliés respectivement par un joint de dilatation comme décrit ci-dessus.

L'invention est décrite ci-après plus en détail à l'aide de figures ne représentant qu'un mode de réalisation préféré de l'invention.

La figure 1 est une vue de face partiellement en coupe d'un joint de dilatation conforme à l'invention.

La figure 2 est une demi-vue en coupe longitudinale de ce même joint.

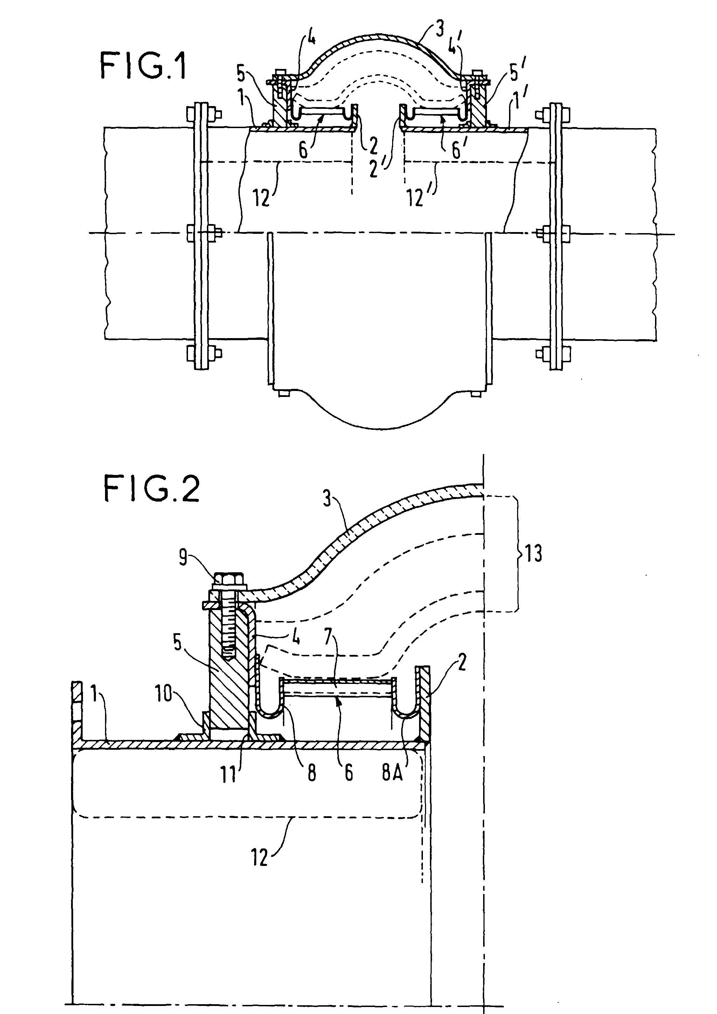

Comme représenté sur la figure 1, le joint de dilatation relie les extrémités de deux conduites 1, 1' destinées à véhiculer un fluide chaud et de préférence de section carrée. Chacune des extrémités est pourvue d'une bride d'extrémité 2, 2', de préférence soudée sur chaque extrémité de conduite. Le joint comporte un manchon 3 constitué d'une bande souple chevauchant les deux extrémités adjacentes et solidaire à ses bords respectifs d'une bride froide 4, 4' solidaire d'un dispositif d'emboîtement dans un agencement de retenue solidaire de la conduite correspondante. Cette bande 3 peut être composé de couches de céramique et de "Téflon".

Le joint comporte également un agencement de liaison 6, 6' reliant la bride d'extrémité 2, 2' et la bride froide correspondante 4, 4'.

De façon connue, les conduites 1 et 1' sont calorifugées par une couche de matériau isolant 12, 12' disposée à l'extérieur ou à l'intérieur des conduites 1, 1' et des couches de matériau isolant 13 sont également disposées à l'intérieur du joint.

Tous ces éléments constitutifs seront décrits plus en détail à l'aide de la figure 2.

L'agencement de liaison 6, 6' doit absorber les déformations thermiques dues à l'écart de températures entre la bride d'extrémité 2, 2' qui est chaude, puisque soumise à la température du fluide chaud véhiculé dans les conduites 1, 1', et la bride froide 4, 4'.

Conformément à l'invention, comme plus visible sur la figure 2, cet agencement de liaison 6 comprend au moins deux éléments, dits premier et second élément, l'un solidaire de la bride froide 4 et l'autre solidaire de la bride d'extrémité 2, le premier élément 7 étant déformable dans le sens tangentiel et le second élément 8 étant flexible et déformable dans le sens longitudinal de la conduite.

Selon ce mode de réalisation préféré, la bande 3 est solidarisée sur la bride froide 4 par des vis 9. L'agencement d'emboîtement 5 constitué d'une bague ou de tronçons de bague est solidarisé à la bride froide 4, de préférence par soudage, et est emboîté entre deux profilés 10, 11 soudés sur la conduite 1. Cet agencement d'emboîtement et l'agencement de retenue associé peuvent être réalisés de façon différente sans sortir du cadre de l'invention, par exemple, selon une autre variante non représentée, l'agencement de retenue peut être une bride périphérique solidaire de la conduite et l'agencement d'emboîtement peut comporter une rainure recevant cette bride.

Le premier élément déformable tangentiellement est un manchon de tôle ondulée 7, les ondulations étant dirigées parallèlement au sens longitudinal de la conduite 1. Le second élément est une lame flexible 8, 8A courbée dont la courbure est perpendiculaire aux ondulations du premier élément 7. L'agencement de liaison 6 comprend deux seconds éléments 8 et 8A, l'un 8 solidaire de la bride froide 4 et l'autre 8A solidaire de la bride d'extrémité 2, ces deux éléments étant reliés l'un à l'autre par un premier élément 7 intermédiaire. Tous ces éléments sont métalliques, de préférence en acier inoxydable.

Le manchon de tôle ondulée 7 se déforme en fonction des variations de section de la conduite dû à la dilatation et absorbe les dilations différentielles tangentielles, ces ondulations lui permettant de se déformer tangentiellement. Ces déformations peuvent être inégales d'un bord à l'autre du manchon 7, celui-ci prenant alors une forme en éventail.

Les lames flexibles 8, 8A absorbent quant à elles les dilatations différentielles longitudinales grâce à leur courbure et la flexion résultant des déplacements de la conduite grâce à leur flexibilité.

Selon le mode de réalisation représenté, l'agencement de liaison 6 comprend deux seconds éléments 8, 8A, ces deux éléments étant reliés l'un à l'autre par un premier élément 7 intermédiaire. Cependant, selon l'invention, il suffit que cet agencement de liaison 6 comprenne un premier élément 7 et un seul second élément 8 ou 8A, pour remplir sa fonction.

Un tel joint de dilatation est en particulier destiné à équiper une conduite de passage de gaz chaud en sortie d'une turbine à gaz dans une chaudière de récupération, les différents tronçons de conduites étant reliés respectivement par ce joint de dilatation.

## Revendications

1. Joint de dilatation reliant les extrémités de deux conduites (1,1') destinées à véhiculer un fluide chaud, chacune des extrémités étant pourvue d'une bride d'extrémité (2, 2'), comportant un manchon (3) constitué d'une bande souple chevauchant les deux extrémités adjacentes et solidaire à ses bords respectivement d'une bride, dite bride froide, (4, 4') solidaire d'un dispositif d'emboîtement (5, 5') dans un agencement de retenue solidaire de la conduite (1, 1') correspondante et comportant également un agencement de liaison (6, 6') reliant la bride d'extrémité (2, 2') et la bride froide (4, 4') correspondante, joint caractérisé en ce que cet agencement de liaison (6) comprend au moins deux éléments reliés l'un à l'autre, dits premier et second élément, l'un solidaire de la bride froide (4) et l'autre solidaire de la bride d'extrémité (2), le premier élément étant un manchon (7) de tôle ondulée, dont les ondulations sont dirigées parallèlement au sens longitudinal de la conduite (1), et le second élément (8) étant flexible et déformable dans le sens longitudinal de la conduite (1).

2. Joint de dilatation selon la revendication 1, caractérisé en ce que le second élément (8) est une lame flexible courbée, de courbure perpendiculaire aux ondulations du manchon (7).

3. Joint de dilatation selon l'une des revendications précédentes, caractérisé en ce que l'agencement de liaison (6) comprend deux seconds éléments (8, 8A), l'un (8) solidaire de la bride froide (4) et l'autre (8A) solidaire de la bride d'extrémité (2), ces deux éléments étant reliés l'un à l'autre par un premier élément (7) intermédiaire.

4. Joint de dilatation selon l'une des revendications précédentes, caractérisé en ce que lesdits premier et second éléments sont en acier inoxydable.

5. Conduite de passage de gaz chaud en sortie d'une turbine à gaz dans une chaudière de récupération caractérisé en ce qu'elle est constituée de tronçons de conduites (1, 1') reliés respectivement par un joint de dilatation conforme à l'une des revendications précédentes.

## Patentansprüche

1. Dehnungsfuge, die die Enden zweier zum Transport einer heißen Flüssigkeit bestimmter Leitungen (1, 1') verbindet; wobei jedes der Enden mit einem Endflansch (2, 2') versehen ist, eine Manschette (3) aufweist, die aus einem elastischen Streifen besteht, der die beiden benachbarten Enden überlappt und an seinen jeweiligen Rändern mit einem Flansch, kalter Flansch genannt, (4, 4') fest verbunden ist, der mit einer Einsatzeinrichtung (5, 5') in einer mit der entsprechenden Leitung (1, 1') fest verbundenen Rückhalteanordnung fest verbunden ist, und auch eine Verbindungsanordnung (6, 6') aufweist, die den Endflansch (2, 2') und den entsprechenden kalten Flansch (4, 4') verbindet, dadurch gekennzeichnet, daß diese Verbindungsanordnung (6) wenigstens zwei miteinander verbundene Elemente umfaßt, erstes und zweites Element genannt, wobei das eine mit dem kalten Flansch (4) und das andere mit dem Endflansch (2) fest verbunden ist, wobei das erste Element eine Manschette (7) aus Wellblech ist, dessen Wellen parallel zur Längsrichtung der Leitung (1) gerichtet sind, und das zweite Element (8) flexibel und in Längsrichtung der Leitung (1) verformbar ist.

2. Dehnungsfuge nach Anspruch 1, dadurch gekennzeichnet, daß das zweite Element (8) eine gekrümmte flexible Zunge mit zu den Wellen der Manschette (7) senkrechter Krümmung ist.

3. Dehnungsfuge nach einem der vorhergehenden Ansprüche, dadurch gekennzeichnet, daß die Verbindungsanordnung (6) zwei zweite Elemente (8, 8A) umfaßt, wobei das eine (8) mit dem kalten Flansch (4) und das andere (8A) mit dem Endflansch (2) fest verbunden ist, wobei diese beiden Elemente durch ein erstes Zwischenelement (7) miteinander verbunden sind.

4. Dehnungsfuge nach einem der vorhergehenden Ansprüche, dadurch gekennzeichnet, daß die ersten und zweiten Elemente aus rostfreiem Stahl bestehen.

5. Leitung für den Durchgang von heißem Gas am Ausgang einer Gasturbine in einem Abhitzekessel, dadurch gekennzeichnet, daß sie aus Leitungsabschnitten (1, 1') besteht, die jeweils durch eine Dehnungsfuge nach einem der vorhergehenden Ansprüche verbunden sind.

## Claims

1. Expansion joint for connecting the ends of two pipes (1, 1') adapted to convey a hot fluid, each end having an end flange (2, 2'), including a sleeve (3) made up of a flexible strip straddling the two adjacent ends and fastened at its respective edges to a cold flange (4, 4')fastened to a nesting device (5, 5') in a retaining arrangement fastened to the corresponding pipe (1, 1') and further including a coupling arrangement (6, 6') connecting the end flange (2, 2') and the corresponding cold flange (4, 4'), characterised in that said coupling arrangement (6) comprises at least first and second members connected together, one fastened to the cold flange (4) and the other fastened to the end flange (2), the first member being a corrugated sheetmetal sleeve (7) the undulations of which are parallel to the longitudinal direction of the pipe (1) and the second member (8) being flexible and deformable in the longitudinal direction of the pipe (1).

2. Expansion joint according to claim 1 characterised in that the second member (8) is a curved flexible plate the curvature of which is perpendicular to the undulations of the sleeve (7).

3. Expansion joint according to claim 1 or claim 2 characterised in that the coupling arrangement (6) comprises two second members (8, 8A) of which one (8) is fastened to the cold flange (4) and the other (8A) is fastened to the end flange (2), said two members being joined together by a first intermediate member (7).

4. Expansion joint according to any one of the preceding claims characterised in that said first and second members are made of stainless steel.

5. Pipe for conveying hot gas from the exhaust of a gas turbine into a heat recovery boiler, characterised in that it comprises pipe sections (1, 1') joined by an expansion joint according to any one of the preceding claims.
